# EUROPEAN PATENT APPLICATION

(11) **EP 4 343 175 A1**
(43) Date of publication of application: **27.03.2024**
(21) Application number: 22921412.7
(22) Date of filing: 29.06.2022
(51) Int. Cl.: F16H 37/12

(54) **TRANSMISSION SWITCHING DEVICE, DRIVING DEVICE AND BASE STATION ANTENNA**

(30) Priority: 19.01.2022 CN 202210060565
(71) Applicant: CICT Mobile Communication Technology Co., Ltd, Wuhan, Hubei 430205 (CN)
(72) Inventor: WU, Han, Wuhan, Hubei 430205 (CN); WU, Yangtao, Wuhan, Hubei 430205 (CN)
(74) Representative: Studio Torta S.p.A.
(86) International application number: PCT/CN2022/102385
(87) International publication number: WO 2023/137981

(57) **Abstract**

A transmission switching device, comprising a linear transmission member (1), a transmission shaft (2), a transmission assembly (3), and a switching output assembly (4). The transmission assembly comprises a support (31) and a driving gear (32), the driving gear and the transmission shaft being both rotatably mounted on the support. The transmission shaft is coaxially connected to the driving gear and is used for driving the driving gear to rotate. The linear transmission member is connected to the support and is used for driving the support to reciprocate. The switching output assembly comprises a plurality of switching output shafts (41), each switching output shaft being provided with a switching output gear (42). The driving gear can be in driving connection with the plurality of switching output gears. The transmission switching device may switch and output to different phase shifters power input into the transmission assembly, so that the phase shifters are driven by fewer driving members, and thus the number of the driving members is reduced. Further provided are a driving device comprising said transmission switching device, and a base station antenna.

## Description

### CROSS-REFERENCE TO RELATED APPLICATION

The present application claims priority to Chinese patent application No. 202210060565.3 filed on January 19, 2022, entitled "Transmission Switching Device, Driving Device and Base Station Antenna", which is hereby incorporated by reference in its entirety.

### FIELD

The present application relates to the field of communication, and in particular, to a transmission switching apparatus, a drive apparatus and a base station antenna.

### BACKGROUND

As number of mobile terminals continues to increase, a demand for mobile communication base station antenna is also increasing. Due to limitations imposed by resources of mobile base station, it has become a common requirement for integrating a plurality of antennas together. Generally, an antenna of each frequency band is equipped with a phase shifter and a downtilt angle regulation apparatus for regulating a phase of the phase shifter. Traditionally, the downtilt angle regulation device used for the phase shifter is usually driven by a motor. For a multi-band antenna, a plurality of downtilt angle regulation apparatuses are required to meet phase regulation requirements of each frequency band, that is, a plurality of motors need to be configured.

As more and more antenna frequencies are integrated, the number of downtilt angle regulation devices is also increasing, and the number of motors used is large, which results in an increase in a weight, a size and a cost of the antenna, and limits a development trend of base station antenna miniaturization.

### SUMMARY

Embodiments of the present application provide a transmission switching apparatus, a drive apparatus and a base station antenna, which solves a problem that a traditional multi-band antenna needs be equipped with a plurality of downtilt angle regulation devices, which results in an increase in the number of motors, and increases in a weight, a size and cost of an antenna.

The present application provides a transmission switching apparatus, including a linear transmission member, a transmission shaft, a transmission component and a switching output component,
where the transmission component includes a bracket and a drive gear, both the drive gear and the transmission shaft are rotatably mounted on the bracket; the transmission shaft is coaxially connected with the drive gear to drive the drive gear to rotate, the linear transmission member is connected with the bracket to drive the bracket to reciprocatedly move; and the switching output component includes a plurality of switching output shafts, each switching output shaft is equipped with a switching output gear, and the drive gear is connected with a plurality of switching output gears in a manner of transmission.

In an embodiment, the linear transmission member is a reciprocating screw.

In an embodiment, the transmission component further includes a plurality of transmission gears, the plurality of transmission gears are meshed with the drive gear respectively, and each of the transmission gears is meshed with the plurality of switching output gears.

In an embodiment, the transmission component further includes a first transmission gear set and a second transmission gear set, where the first transmission gear set and the second transmission gear set are disposed at intervals along an axial direction of the drive gear; and the first transmission gear set includes at least one first transmission gear, and the second transmission gear set includes a transmission transition gear and at least one second transmission gear,
where the first transmission gear and the transmission transition gear are meshed with the drive gear respectively, the second transmission gear is meshed with the transmission transition gear, and both the first transmission gear and the second transmission gear are meshed with the plurality of switching output gears.

In an embodiment, the plurality of switching output shafts are disposed at two sides of the transmission shaft; and
a number of the first transmission gears is two, the two first transmission gears are disposed at two sides of the transmission shaft to be meshed with the switching output gears on two sides of the transmission shaft respectively; and a number of the second transmission gears is two, the two second transmission gears are disposed at two sides of the transmission shaft to be connected with the switching output gears at two sides of the transmission shaft in a manner of transmission.

In an embodiment, the switching output shaft is parallel to the transmission shaft, and the plurality of switching output shafts are disposed from a position close to the transmission shaft to a direction away from the transmission shaft; and
other switching output shafts between the transmission shaft and any of the switching output shafts are equipped with a switching transition gear, the switching transition gear is movably connected with the switching output shaft in a circumferential direction, and the drive gear is connected with switching output gear in a manner of transmission through the switching transition gear.

In an embodiment, the bracket is equipped with a return-to-zero stopper, where the return-to-zero stopper is used for a position detection mechanism to detect a relative position between the bracket and the reciprocating screw.

In an embodiment, both the bracket and the drive gear are movably connected with the transmission shaft in an axial direction of the transmission shaft.

In an embodiment, the transmission switching apparatus further includes a switching input component, where the switching input component includes a drive shaft, a first output shaft and a second output shaft, the drive shaft is used to drive the first output shaft and the second output shaft to rotate respectively; the first output shaft is equipped with a first gear, an end of the reciprocating screw is equipped with a second gear, the first gear is meshed with the second gear, and the second output shaft is fixedly connected with the transmission shaft in a circumferential direction of the transmission shaft.

In an embodiment, the switching input component further includes a first connection shaft and a second connection shaft, where the drive shaft, the first connection shaft and the second connection shaft are movably connected in an axial direction of the drive shaft, and the drive shaft is used to drive the first connection shaft and the second connection shaft to rotate; and
the first connection shaft abuts against the first output shaft through a first bevel gear structure, the second connection shaft abuts against the second output shaft through a second bevel gear structure, and a rotation direction of the first bevel gear structure is opposite to a rotation direction of the second bevel gear structure.

In an embodiment, a first elastic member is disposed between the first connection shaft and the drive shaft, and the first connection shaft abuts against the first output shaft through the first elastic member; and a second elastic member is disposed between the second connection shaft and the drive shaft, and the second connection shaft abuts against the second output shaft through the second elastic member.

In an embodiment, the first elastic member is a first compression spring, and two ends of the first compression spring abut against the drive shaft and the first connection shaft respectively; and the second elastic member is a second compression spring, and two ends of the second compression spring abut against the drive shaft and the second connection shaft respectively.

In an embodiment, the drive shaft is equipped with a hollow shaft segment, the first connection shaft is sleeved outside the hollow shaft segment, the hollow shaft segment is sleeved outside the second connection shaft, an inner wall and an outer wall of the hollow shaft segment are respectively equipped with limit structures, and the limit structure is used for limiting a rotation of the drive shaft relative to the first connection shaft and the second connection shaft.

The present application further provides a drive apparatus, including a drive component and any one of the above transmission switching apparatuses, where a transmission shaft and a linear transmission member are connected with the drive component respectively, to drive the transmission shaft and the linear transmission member to move.

The present application further provides a base station antenna, including a plurality of phase shifters and any one of the above transmission switching apparatuses; or including a plurality of phase shifters and any one of above the drive apparatuses, where a plurality of switching output shafts are connected with power input ends of the plurality of phase shifters in a one-to-one correspondence.

In the transmission switching apparatus, the drive apparatus and the base station antenna provided by this application, the transmission switching apparatus is equipped with the linear transmission member, the transmission shaft, the transmission component and the switching output component, and the linear transmission member is used to drive the transmission component to move to a designated position, and the drive gear of the transmission component is connected with a designated switching output gear in the switching output component in a manner of transmission, so that one drive gear is switchably connected with the plurality of switching output shafts. In case that each switching output shaft is connected to one phase shifter, power input to the transmission component can be switched and output to different phase shifters. By rationally disposing the plurality of switching output shafts and switching output gears, fewer drive members can drive more phase shifters and the number of drive members is reduced.

### BRIEF DESCRIPTION OF THE DRAWINGS

In order to illustrate the solutions of the embodiments based on the present application, the accompanying drawings used in the description of the embodiments are briefly introduced below. It should be noted that the drawings in the following description are only some embodiments of the present application. For those of ordinary skill in the art, other drawings can be obtained based on these drawings without creative effort.
FIG. 1 is an overall schematic structural diagram of a transmission switching apparatus according to an embodiment of the present application;
FIG. 2 is an exploded schematic structural diagram of a transmission switching apparatus according to an embodiment of the present application;
FIG. 3 is a section view of a transmission switching apparatus according to an embodiment of the present application;
FIG. 4 is a schematic diagram of a first transmission state of a transmission switching apparatus according to an embodiment of the present application;
FIG. 5 is a schematic diagram of a second transmission state of a transmission switching apparatus according to an embodiment of the present application;
FIG. 6 is a schematic structural diagram of a reciprocating transmission mechanism in a transmission switching apparatus according to an embodiment of the present application;
FIG. 7 is a schematic exploded structural diagram of the reciprocating transmission mechanism in FIG. 6;
FIG. 8 is a section view of the reciprocating transmission mechanism in FIG. 6;
FIG. 9 is a schematic assembly diagram of a reciprocating screw and a epicyclic pin of the reciprocating transmission mechanism in FIG. 6;
FIG. 10 is a schematic structural diagram of a switching input component of a transmission switching apparatus according to an embodiment of the present application;
FIG. 11 is a section view of the switching input component in FIG. 10; and
FIG. 12 is a schematic exploded structural diagram of the switching input component in FIG. 10.

### Reference Numerals:

100: reciprocating transmission mechanism; 1: linear transmission member; 11: bidirectional circulating thread groove; 12: second gear; 2: transmission shaft; 3: transmission component; 31: bracket; 311: return-to-zero stopper; 312: limit portion; 32: drive gear; 33: transmission gear; 331: first transmission gear; 332: second transmission gear; 34: transmission transition gear; 35: epicyclic pin; 351: thread tooth; 4: switching output component; 41: switching output shaft; 42: switching output gear; 43: switching transition gear; 44: first support member; 45: second support member; 5: switching input component; 51: drive shaft; 511: hollow shaft segment; 52: first output shaft; 521: first gear; 53: second output shaft; 531: connection hole; 54: first connection shaft; 55 second connection shaft; 56 first elastic member; 57 second elastic member.

### DETAILED DESCRIPTION

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In the description of the embodiments of the present application, it should be noted that, unless otherwise clearly specified and limited, the terms "first" and "second" are used to clearly illustrate the numbering of product components and do not represent any substantial the difference. In addition, "a plurality of' means two or more.

Unless otherwise clearly specified and limited, the terms "installation" and "connection" should be understood in a broad sense. For example, it can be a fixed connection, a detachable connection, or an integral connection; it can be a direct connection or an indirect connection through an intermediary. For those of ordinary skill in the art, the specific meanings of the above terms in this application can be understood based on specific situations.

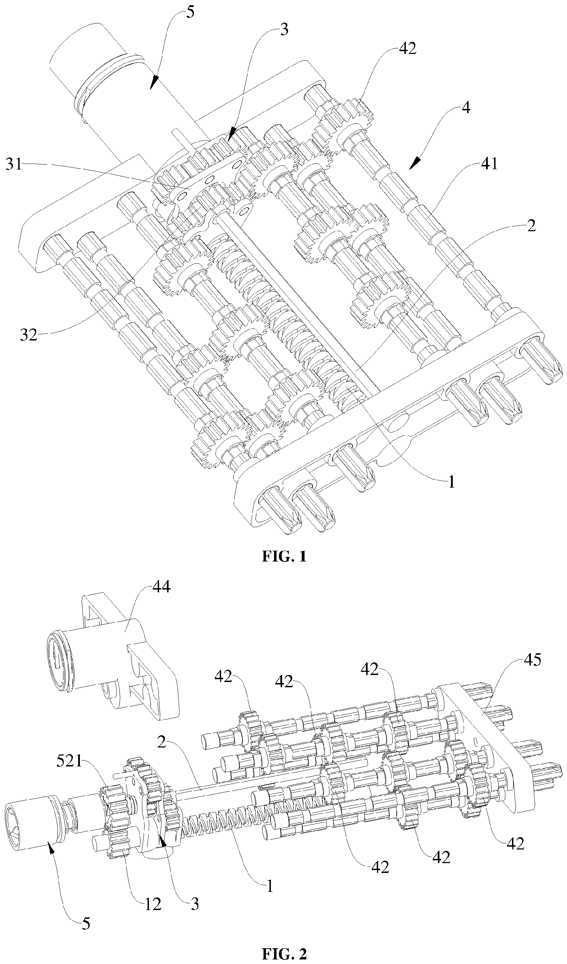

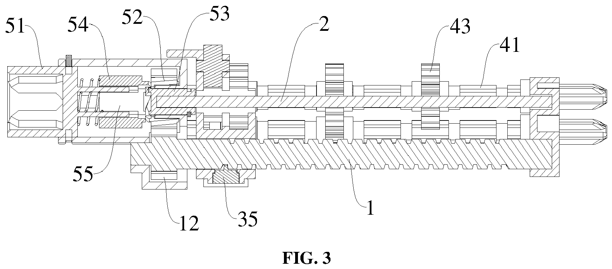

A transmission switching apparatus, a drive apparatus and a base station antenna of the present application are described below with reference to FIG. 1 to FIG. 12.

As shown in FIG. 1 to FIG. 5, a transmission switching apparatus provided by the present application includes a linear transmission member 1, a transmission shaft 2, a transmission component 3 and a switching output component 4. The transmission assembly 3 includes a bracket 31 and a drive gear 32. Both the drive gear 32 and the transmission shaft 2 are rotatably mounted on the bracket 31. The transmission shaft 2 is coaxially connected with the drive gear 32 and is used to drive the drive gear 32 to rotate. The linear transmission member 1 is connected with the bracket 31 to drive the bracket 31 to reciprocatedly move. The switching output component 4 includes a plurality of switching output shafts 41, each switching output shaft 41 is equipped with a switching output gear 42, and the drive gear 32 is connected with a plurality of switching output gears 42 in a manner of transmission.

The linear transmission member 1 and the transmission shaft 2 are both used to connect with a drive member (such as a motor) to transmit the power of the drive member to the transmission component 3 and the drive gear 32. The linear transmission member 1 can be a power output part of a linear drive member, such as a slide block of a linear motor, a telescopic rod of an electric push rod or a screw rod, as long as the linear transmission member 1 can make the transmission component 3 to reciprocate in a linear motion.

The drive gear 32 is coaxially connected with the transmission shaft 2, and the drive gear 32 and the transmission shaft 2 are relatively fixed in a circumferential direction, so that the transmission shaft 2 can drive the drive gear 32 to rotate. The switching output gear 42 and the switching output shaft 41 are relatively fixed at least in an axial direction, so that the switching output gear 42 can drive the switching output shaft 41 to rotate.

The plurality of switching output shafts 41 are disposed parallel to the transmission shaft 2. As shown in FIG. 2, the switching output component 4 further includes a first support member 44 and a second support member 45. Two ends of the transmission shaft 2 and the plurality of switching output shafts 41 are supported by the first support member 44 and the second support member 45 respectively, and are rotatably connected with the first support member 44 and the second support member 45. The linear transmission member 1 is movably disposed at the first support member 44 in a movement direction of the linear transmission member 1.

The plurality of switching output gears 42 are disposed at intervals along an axial direction of the switching output shaft 41, that is, the plurality of switching output gears 42 respectively correspond to different positions in a transmission direction of the linear transmission member 1, and the drive gear 32 is connected with different switching output gears 42 in as manner of transmission at different positions in the transmission direction of the linear transmission member 1.

The transmission switching apparatus can be used to connect the drive member and a phase shifter, where each switching output shaft 41 serves as a power output shaft of the transmission switching apparatus, and is used to connect the phase shifter in a base station antenna. The linear transmission member 1, the transmission shaft 2 and the transmission component 3 form a reciprocating transmission mechanism 100. The transmission component 3 in the reciprocating transmission mechanism 100 is driven by a power of the drive member to reciprocate to switch the switching output gear 42 meshed with the drive gear 32, and switch the switching output shaft 41 that establishes a transmission connection with the reciprocating transmission mechanism 100, so that the drive member can regulate a tilt angle of the phase shifter connected with the switching output shaft 41.

In case that the transmission switching apparatus needs to switch different power output ends, the transmission component 3 is first driven to move to a designated position through the linear transmission member 1, so that the drive gear 32 is connected with the switching output gear 42 in a manner of transmission on a designated switching output shaft 41. The drive gear 32 is then driven to rotate by the transmission shaft 2, and the designated switching output shaft 41 is driven to rotate.

The transmission switching apparatus provided by the present application is equipped with the linear transmission member 1, the transmission shaft 2, the transmission component 3 and the switching output component 4, and the linear transmission member 1 is used to drive the transmission component 3 to move to the designated position, so that the drive gear 32 of the transmission component 3 is connected with a designated switching output gear 42 in the switching output component 4 in a manner of transmission, so that one drive gear 32 is switchably connected with the plurality of switching output shafts 41. In case that each switching output shaft 41 is connected to one phase shifter, the power input to the transmission component 3 can be switched and output to different phase shifters. By reasonably disposing the plurality of switching output shafts 41 and the switching output gears 42, fewer drive members can drive more phase shifters, and the number of the drive members is reduced.

The transmission component 3 can be directly meshed and connected with the switching output gear 42 through the drive gear 32, so that the transmission component 3 is connected with the switching output shaft 41 in a manner of transmission.

In an embodiment, the transmission component 3 further includes a plurality of transmission gears 33 that are meshed with the drive gears 32 respectively, and each transmission gear 33 can be meshed with the plurality of switching output gears 42. The transmission component 3 is meshed and connected with the switching output gear 42 through a plurality of driven gears that are meshed with the drive gear 32, so that the transmission component 3 is connected with the switching output shafts 41 in a manner of transmission.

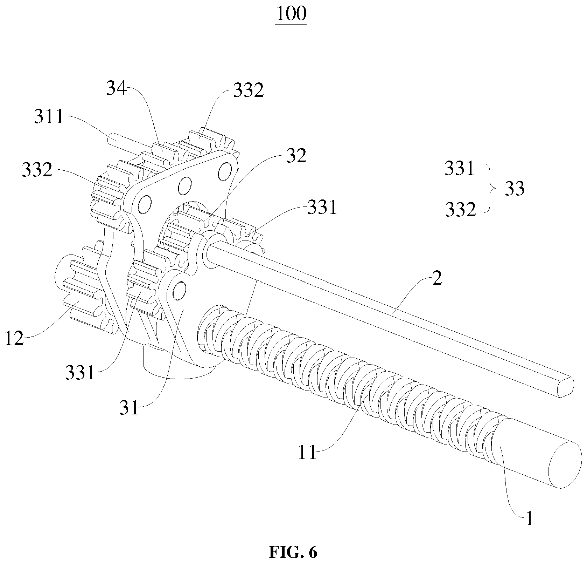

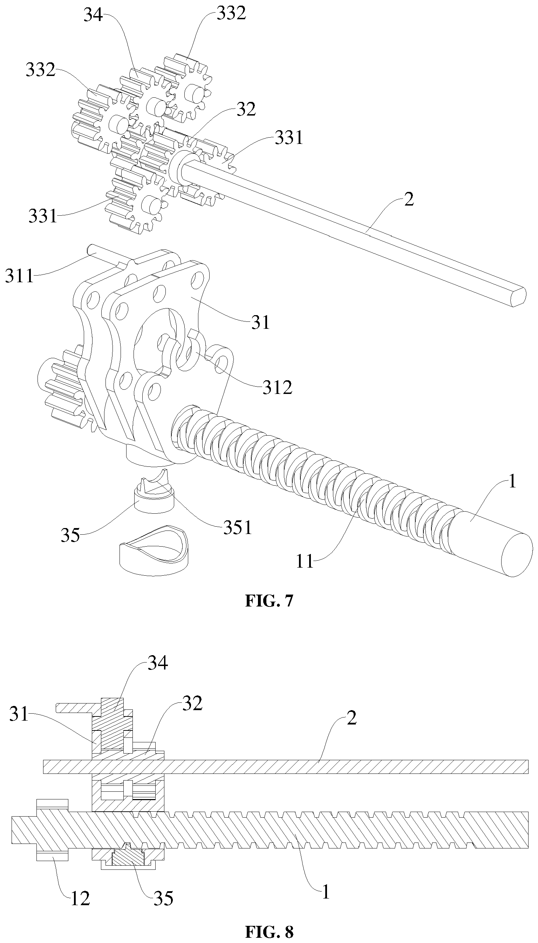

In an embodiment, as shown in FIG. 6 and FIG. 7, the transmission component 3 further includes a transmission transition gear 34 t meshed with the drive gear 32, and the plurality of transmission gears 33 are meshed with the transmission transition gear 34 respectively. The transmission component 3 is meshed and connected with the switching output gears 42 through the transmission transition gear 34 and the plurality of transmission gears 33 in sequence, so that the transmission component 3 is connected with the switching output shafts 41 in a manner of transmission.

Furthermore, a transmission direction of the transmission shaft 2 is disposed parallel to a transmission direction of the linear transmission member 1, that is, an axial direction of a reciprocating screw. The bracket 31 and the drive gear 32 are both movably connected with the transmission shaft 2 in the axial direction. In case that the transmission component 3 reciprocates through the linear transmission member 1, the transmission component 3 reciprocatedly moves along the transmission shaft 2 simultaneously. As such, in case that the drive member for driving the transmission shaft 2 remains stationary, the power of the drive member can still be transmitted to the drive gear 32 through the transmission shaft 2. For example, the transmission shaft 2 has a polygonal cross-sectional shape, the drive gear 32 is equipped with a mounting hole matched with the transmission shaft 2, and the transmission shaft 2 penetrates through the mounting hole.

As shown in FIG. 6 to FIG. 9, in some embodiments of the present application, the linear transmission member 1 is a reciprocating screw. The reciprocating screw is equipped with a bidirectional circulating thread groove 11. The bidirectional circulating thread groove 11 includes two thread grooves that rotate in two directions. The two thread grooves are butted with each other at starting ends and ending ends, and middle segments are interspersed with each other. The reciprocating screw is connected with the bracket 31 to drive the bracket 31 to reciprocatedly move, so that the transmission component 3 is driven to reciprocate along an axial direction of the reciprocating screw.

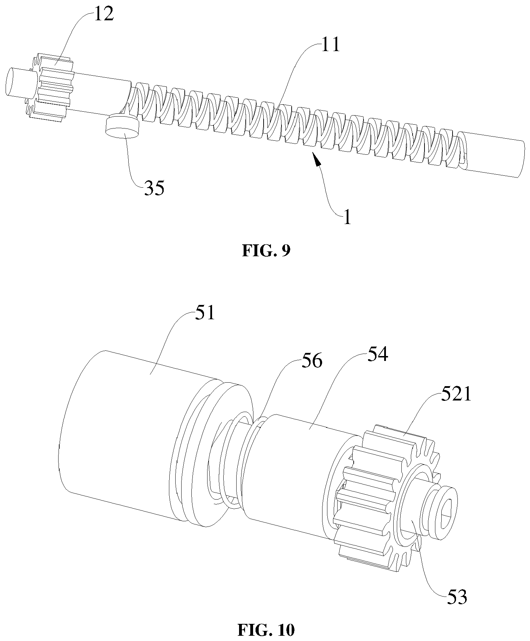

As shown in FIG. 8 and FIG. 9, the transmission component 3 further includes a epicyclic pin 35. The epicyclic pin 35 is mounted on the bracket 31. The epicyclic pin 35 is relatively fixed to the bracket 31 in the axial direction of the reciprocating screw. An end of the epicyclic pin 35 is equipped with a thread tooth 351, which is movably disposed in the bidirectional circulating thread groove 11 and can move along the bidirectional circulating threaded groove 11. The thread tooth 351 is concavely and convexly matched with the bidirectional circulating thread groove 11. In an embodiment, the bracket 31 is equipped with a pin hole, and the epicyclic pin 35 is adaptively connected to the pin hole and is axially limited to the pin hole. In an embodiment, an axis of the pin hole is vertical to an axis of the reciprocating screw.

In case that the reciprocating screw rotates in a certain direction, the bidirectional circulating thread groove 11 pushes the thread teeth 351 of the epicyclic pin 35 to move along the axial direction of the reciprocating screw, and pushes the bracket 31 to move along the axial direction of the reciprocating screw. In case that the epicyclic pin 35 moves to an end of the bidirectional circulating thread groove 11, the epicyclic pin 35 can automatically change direction. As such, in case that the linear transmission member 1 rotates in one direction, the transmission component 3 is pushed to reciprocate in the linear motion, so that different linear positions in an axial direction of the transmission shaft 2 is output at a fixed point.

Furthermore, as shown in FIG. 6 and FIG. 7, the bracket 31 is equipped with a return-to-zero stopper 311 and the return-to-zero stopper 311 is used for a position detection mechanism to detect a relative position between the bracket 31 and the reciprocating screw. The return-to-zero stopper 311 is fixed to the bracket 31 or is integrally formed with the bracket 31. In case that the bracket 31 moves to any position along the reciprocating screw, the return-to-zero stopper 311 moves with the bracket 31 to a corresponding position. In case that the return-to-zero stopper 311 reaches a predetermined position, the position detection mechanism determines a distance that the transmission component 3 is driven to move based on a position of the bracket 31 relative to the reciprocating screw.

Furthermore, the bracket 31 is equipped with a limit portion 312, and the drive gear 32 is axially limited to the limit portion 312 and is movably connected with the limiting portion 312 in the circumferential direction, so that the drive gear 32 can rotate relative to the bracket 31 and the drive gear 32 is prevented from axially displacing relative to the bracket 31.

As shown in FIG. 6 and FIG. 7, in some embodiments of the present application, the transmission component 3 further includes a first transmission gear set and a second transmission gear set. The first transmission gear set and the second transmission gear set are disposed at intervals along the axial direction of the drive gear 32. The first transmission gear set includes at least one first transmission gear 331, and the second transmission gear set includes the transmission transition gear 34 and at least one second transmission gear 332. The plurality of transmission gears 33 described in the above embodiment include the first transmission gear 331 of the first transmission gear set and the second transmission gear 332 of the first transmission gear set.

The first transmission gear 331 and the transmission transition gear 34 are meshed with the drive gear 32 respectively, the second transmission gear 332 is meshed with the transmission transition gear 34, and both the first transmission gear 331 and the second transmission gear 332 can be meshed with the plurality of switching output gears 42.

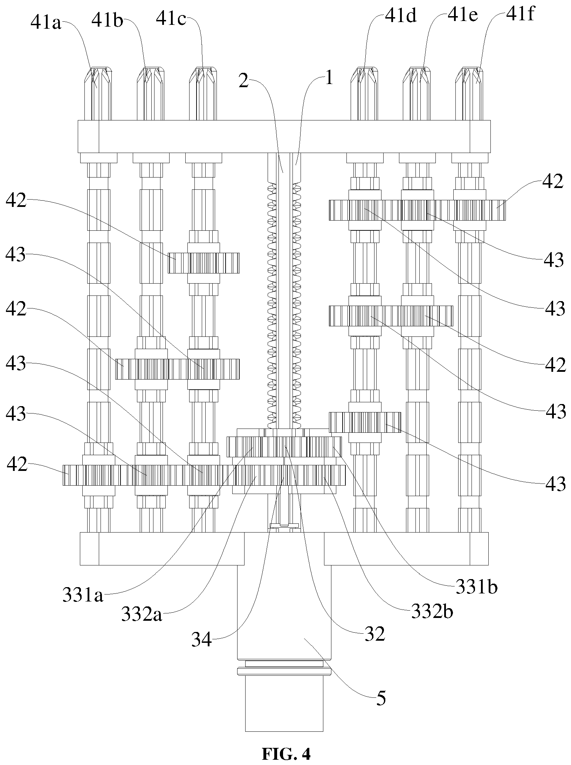

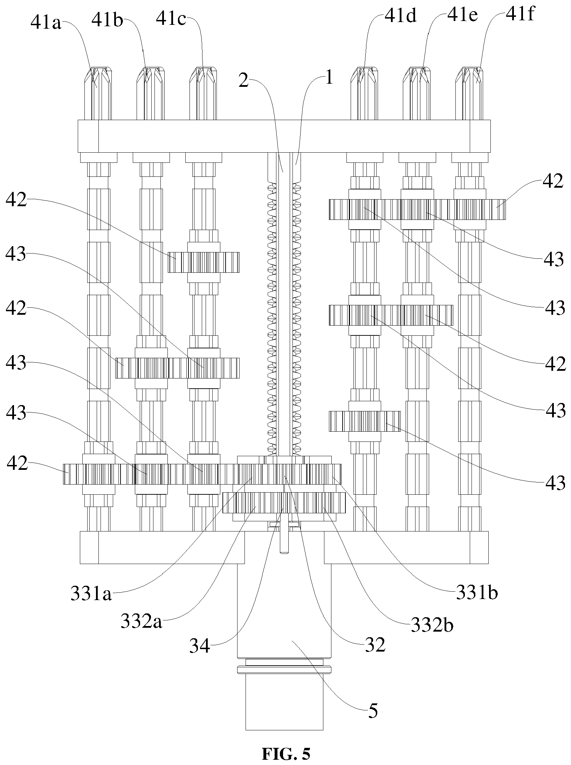

In an embodiment, as shown in FIG.4 and FIG. 5, the switching output component 4 includes six switching output shafts 41, namely 41a, 41b, 41c, 41d, 41e and 41f.

In case that it is necessary to drive the switching output shaft 41c to rotate in a first direction, the transmission component 3 is first moved to a designated position through the linear transmission member 1, and the first transmission gear 331 is meshed with the switching output gear 42 on the switching output shaft 41c. The drive gear 32 is then driven to rotate in a second direction through the transmission shaft 2 to drive the switching output shaft 41c to rotate in the first direction.

In case that it is necessary to drive the switching output shaft 41c to rotate in the second direction, the transmission component 3 is first moved to another designated position through the linear transmission member 1, and the second transmission gear 332 is meshed with the switching output gear 42 on the switching output shaft 41c. The driving gear 32 is then driven to rotate in the second direction through the transmission shaft 2 to drive the switching output shaft 41c to rotate in the second direction.

In this embodiment, by disposing the first transmission gear set and the second transmission gear set, and by regulating the linear transmission member 1, the first transmission gear 331 or the second transmission gear 332 on the transmission component 3 is selectively meshed with the switching output gear 42 on a target switching output shaft 41 for transmission, and the switching output shaft 41 in two directions is controlled and regulated.

The switching output shaft 41 in the embodiment of the present application is disposed parallel to the transmission shaft 2 and can be disposed at any side of the transmission shaft 2, as long as there is no structural interference with a reciprocating movement of the transmission component 3 and no structural interference with a mesh transmission between the transmission component 3 and the switching output gears 42 on each switching output shaft 41.

In some embodiments of the present application, the plurality of switching output shafts 41 are disposed at two sides of the transmission shaft 2. The plurality of switching output shafts 41 are disposed at two sides of the transmission shaft 2 and the linear transmission member 1, that is, the plurality of switching output shafts 41 are disposed at two sides of a common plane where an axis of the transmission shaft 2 and a transmission axis of the linear transmission member 1 are located. As shown in FIG. 1, FIG. 2, FIG. 4 and FIG. 5, the plurality of switching output shafts 41 are symmetrically disposed at two sides of the transmission shaft 2.

A number of the first transmission gears 331 is two. The two first transmission gears 331 are disposed at two sides of the transmission shaft 2 to be meshed with the switching output gears 42 on two sides of the transmission shaft 2 respectively. A number of the second transmission gears 332 is two. The two second transmission gears 332 are disposed at two sides of the transmission shaft 2 to be connected with the switching output gears 42 on two sides of the transmission shaft 2 in a manner of transmission.

In an embodiment, as shown in FIG. 1 to FIG. 3, the two first transmission gears 331 are the first transmission gear 331a and the first transmission gear 331b respectively. The two second transmission gears 332 are the second transmission gear 332a and the second transmission gear 332b respectively. As shown in FIG. 4 and FIG. 5, the switching output shafts 41a, 41b and 41c are disposed at a left side of the transmission shaft 2, and the switching output shafts 41d, 41e, and 41f are disposed at a right side of the transmission shaft 2. The first transmission gear 331 is used for being connected with the switching output shafts 41a, 41b and 41c on the left side in a manner of transmission, and the second transmission gear 332 is used for being connected with the switching output shafts 41d, 41e and 41f on the right side in a manner of transmission.

In this embodiment, by disposing transmission gears on two sides of the transmission shaft 2, it is beneficial to increase the number of switching output shafts 41 to connect more phase shifters, and a structural layout of the transmission switching apparatus can be more symmetrical, and a center of gravity of the transmission switching apparatus can be more central. The plurality of switching output shafts 41 on each side of the transmission shaft 2 can be alternately staggered in a direction vertical to the axis of the transmission shaft 2, and the transmission switching apparatus has a compact structure, which is beneficial to reduce the volume of the transmission switching apparatus.

In some embodiments of the present application, the switching output shaft 41 is parallel to the transmission shaft 2, and the plurality of switching output shafts 41 are disposed from a position close to the transmission shaft 2 to a direction away from the transmission shaft 2. other switching output shafts 41 between the transmission shaft 2 and any switching output shaft 41 is equipped with a switching transition gear 43. The switching transition gear 43 is movably connected with the switching output shaft 41 in the circumferential direction, and the drive gear 32 is connected with any switching output gear 42 in a manner of transmission through the switching transition gear 43.

As shown in FIG. 4 and FIG. 5, the switching output shafts 41c, 41b and 41a are disposed in sequence from a position close to a left side of the transmission shaft 2 to the direction away from the transmission shaft 2, and the switching output shafts 41d, 41e and 41f are disposed in sequence from a position close to a right side of the transmission shaft 2 to the direction away from the transmission shaft 2.

Each switching output shaft 41 is equipped with one switching output gear 42. Positions on the switching output shaft 41b and the switching output shaft 41c corresponding to the switching output gear 42 on the switching output shaft 41a are respectively equipped with switching transition gears 43, the two switching transition gears 43 are meshed, and the switching transition gear 43 on the switching output shaft 41b is meshed with the switching output gear 42 on the switching output shaft 41a. A position of the switching output shaft 41c corresponding to the switching output gear 42 on the switching output shaft 41b is equipped with the switching transition gear 43, and the switching transition gear 43 is meshed with the switching output gear 42 on the switching output shaft 41b.

Positions on the switching output shaft 41e and the switching output shaft 41d corresponding to the switching output gear 42 on the switching output shaft 41f are respectively equipped with switching transition gears 43, the two switching transition gears 43 are meshed, and the switching transition gear 43 on the switching output shaft 41e is meshed with the switching output gear 42 on the switching output shaft 41f. A position of the switching output shaft 41d corresponding to the switching output gear 42 on the switching output shaft 41e is equipped with the switching transition gear 43, and the switching transition gear 43 is meshed with the switching output gear 42 on the switching output shaft 41e.

Since the switching transition gear 43 and the switching output shaft 41 corresponding to the switching transition gear 43 are movably connected in the circumferential direction, in case that the transmission component 3 is connected with the switching output gear 42 of the switching output shaft 41a in a manner of transmission through switching transition gears 43 corresponding to the switching output shaft 41c and the switching output shaft 41b in sequence, the transmission component 3 can drive the switching output shaft 41a to rotate, while the switching output shaft 41b and the switching output shaft 41c remain stationary. Similarly, in case that the transmission component 3 is connected with the switching output gear 42 of the switching output shaft 41b in a manner of transmission through the switching transition gear 43 on the switching output shaft 41c, the transmission component 3 can drive the switching output shaft 41b to rotate, and the switching output shaft 41c remains stationary. Transmission connections between the transmission component 3 and the switching output shafts 41d, 41e and 41f can be deduced in sequence and will not be described herein.

The transmission switching apparatus provided by the embodiment of the present application is used to connect the drive member and the phase shifter. The number of drive member may be two, namely a first drive member and a second drive member. The first drive member is connected with the transmission shaft 2, to drive the transmission shaft 2 to rotate. The second drive member is connected with the linear transmission member 1, to drive the linear transmission member 1 to move to drive the bracket 31 to reciprocatedly move along a straight line. For example, the first drive member is a rotary motor, and the second drive member is a linear motor.

The number of drive members may also be one. The linear transmission member 1 is a reciprocating screw, and both the bracket 31 and the drive gear 32 are movably connected with the transmission shaft 2 in the axial direction of the transmission shaft 2. As shown in FIG. 1 to FIG. 5 and FIG. 10 to FIG. 12, the transmission switching apparatus further includes a switching input component 5. The switching input component 5 includes a drive shaft 51, a first output shaft 52 and a second output shaft 53. The drive shaft 51 is used to drive the first output shaft 52 and the second output shaft 53 to rotate respectively. The first output shaft 52 is equipped with a first gear 521, an end of the reciprocating screw is equipped with a second gear 12, and the first gear 521 is meshed with the second gear 12. The second output shaft 53 is fixedly connected with the transmission shaft 2 in a circumferential direction of the transmission shaft 2.

The drive shaft 51, the first output shaft 52 and the second output shaft 53 are disposed coaxially. The first output shaft 52 is provided as a hollow shaft and is located outside the second output shaft 53. As shown in FIG. 2, FIG. 3, and FIG. 6 to FIG. 9, the first gear 521 is coaxially and fixedly connected with or integrally formed with the first output shaft 52, and the second gear 12 is coaxially and fixedly connected with or integrally formed with the reciprocating screw. The switching input component 5 drives the reciprocating screw to rotate through the first output shaft 52.

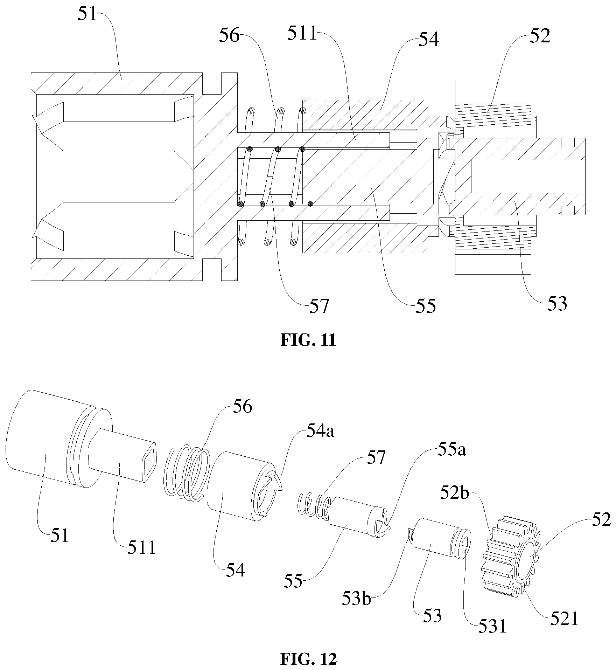

The second output shaft 53 and the transmission shaft 2 are relatively fixed in the circumferential direction. The switching input component 5 drives the transmission shaft 2 to rotate through the second output shaft 53. For example, the second output shaft 53 is coaxially and fixedly connected with the transmission shaft 2. Alternatively, as shown in FIG. 12, the second output shaft 53 is equipped with a connection hole 531, and the transmission shaft 2 is inserted into the connection hole 531. A cross-sectional shape of the connection hole 531 fits the transmission shaft 2 to limit the transmission shaft 2 and the second output shaft 53 to move relatively in the circumferential direction. The connection hole 531 may be a polygonal hole, a semicircular hole, or a double D hole as shown in FIG. 12.

In case that the transmission switching apparatus needs to switch different power output ends, the first output shaft 52 of the switching input component 5 first drives the reciprocating screw to rotate to move the transmission component 3 to a designated position, so that the transmission component 3 is meshed and connected with the switching output gear 42 on the designated switching output shaft 41. The second output shaft 53 of the switching input component 5 drives the transmission shaft 2 to rotate, the designated switching output shaft 41 is driven to rotate, and different power output ends are switched.

It should be noted that the second gear 12 can also be disposed at the transmission shaft 2, and the first gear 521 on the first output shaft 52 is meshed with the second gear 12 to drive the transmission shaft 2 to rotate. The second output shaft 53 is coaxially and fixedly connected with the reciprocating screw, to drive the reciprocating screw to rotate.

As shown in FIG. 11 and FIG. 12, the switching input component 5 further includes a first connection shaft 54 and a second connection shaft 55. The drive shaft 51, the first connection shaft 54 and the second connection shaft 55 are movably connected in an axial direction of the drive shaft 51, and the drive shaft 51 is used to drive the first connection shaft 54 and the second connection shaft 55 to rotate. The first connection shaft 54 abuts against the first output shaft 52 through a first bevel gear structure. The second connection shaft 55 abuts against the second output shaft 53 through a second bevel gear structure. The first bevel gear structure and the second bevel gear structure abut against each other. A rotation direction of the first bevel gear structure is opposite to a rotation direction of the second bevel gear structure.

A first end of the drive shaft 51 is coaxially connected with the first connection shaft 54 and the second connection shaft 55 simultaneously, and both the first connection shaft 54 and the second connection shaft 55 are movably connected with the drive shaft 51 in the circumferential direction, and relatively fixed in the circumferential direction. The first bevel gear structure includes a bevel gear structure 54a disposed at the first connection shaft 54 and a bevel gear structure 52b disposed at the first output shaft 52. The bevel gear structure 54a is matched and connected with the bevel gear structure 52b. The second bevel gear structure includes a bevel gear structure 55a disposed at the second connection shaft 55 and a bevel gear structure 53b disposed at the second output shaft 53. The bevel gear structure 55a is matched and connected with the bevel gear structure 53b.

The rotation direction of the first bevel gear structure is opposite to the rotation direction of the second bevel gear structure. In case of rotating in a first direction, the drive shaft 51drives the first connection shaft 54 and the first output shaft 52 to rotate in the first direction, and the second output shaft 53 does not rotate. In case that the drive shaft 51 rotates in the second direction, the drive shaft 51 drives the second connection shaft 54 and the second output shaft 53 to rotate in the second direction and the first output shaft 52 does not rotate.

In case that the transmission switching apparatus needs to switch different power output ends, the drive shaft 51 is first driven to rotate in the first direction, so that the first connection shaft 54 rotates in the first direction, the bevel gear structure 54a is meshed with the bevel gear structure 52b, the first connection shaft 54 drives the first output shaft 52 to rotate in the first direction, and the reciprocating screw is driven to rotate. The second connection shaft 55 rotates in the first direction, and the second output shaft 53 does not rotate since the bevel gear structure 55a and the bevel gear structure 53b cannot be meshed in the first direction, that is, in a slipping state.

After the reciprocating screw moves the transmission component 3 to the designated position, and the transmission component 3 is meshed and connected with the switching output gear 42 on the designated switching output shaft 41, the drive shaft 51 is driven to rotate in the second direction, so that the second connection shaft 55 rotates in the second direction, the bevel gear structure 55a is meshed with the bevel gear structure 53b, the second connection shaft 55 drives the second output shaft 53 to rotate in the second direction, and the designated switching output shaft 41 is driven to rotate, and the power output end is switched. The first connection shaft 54 rotates in the second direction, and the first output shaft 52 does not rotate since the bevel gear structure 54a and the bevel gear structure 52b cannot be meshed with the second direction, that is, in the slipping state.

The switching input component in this embodiment can change the transmission connection between the drive shaft 51 and both the first output shaft 52 and the second output shaft 53 by changing a rotation direction of the drive shaft 51, so that the transmission connection between the drive shaft 51 and the linear transmission member 1 and the transmission shaft 2 is switched. By connecting a single motor to the drive shaft 51, a rotational drive of the single motor in two directions can be loaded on the reciprocating screw and the transmission shaft 2 without interfering with each other, which greatly reduces a number of motors used and reduces space and cost of drive apparatus for the plurality of phase shifters.

Furthermore, as shown in FIG. 11 and FIG. 12, in some embodiments of the present application, a first elastic member 56 is disposed between the first connection shaft 54 and the drive shaft 51. The first connection shaft 54 abuts against the first output shaft 52 through the first elastic member 56. A second elastic member 57 is disposed between the second connection shaft 55 and the drive shaft 51. The second connection shaft 55 abuts against the second output shaft 53 through the second elastic member 57. The first elastic member 56 may be a compression spring plate or a compression spring.

In case that the drive shaft 51 rotates in the first direction, the first connection shaft 54 rotates in the first direction, the bevel gear structure 54a is meshed with the bevel gear structure 52b, and the first elastic member 56 pushes the first connection shaft 54 to ensure that the bevel gear structure 54a is meshed with the bevel gear structure 52b, which drives the reciprocating screw to rotate in the first direction. In case that the drive shaft 51 rotates in the second direction, the second connection shaft 55 rotates in the second direction, the bevel gear structure 55a is meshed with the bevel gear structure 53b, and the second elastic member 57 pushes the second connection shaft 55 to ensure that the bevel gear structure 55a is meshed with the bevel gear structure 53b, which drives the transmission shaft 2 to rotate in the second direction.

Furthermore, in some embodiments of the present application, the drive shaft 51 is equipped with a hollow shaft segment 511, the first connection shaft 54 is sleeved outside the hollow shaft segment 511, and the hollow shaft segment 511 is sleeved outside the second connection shaft 55. An inner wall and an outer wall of the hollow shaft segment 511 are respectively equipped with limit structures, and the limit structure is used for limiting a rotation of the drive shaft 51 relative to the first connection shaft 54 and the second connection shaft 55. Both the inner wall and the outer wall of the hollow shaft segment 511 in the axial direction of the drive shaft 51 have cross-sections of polygons, such as square, hexagonal, or circular with straight sides, so that the limit structure is formed on the inner and outer walls of the hollow shaft segment 511.

For example, as shown in FIG. 12, both the inner wall and the outer wall of the hollow shaft segment 511 have a square cross-section in the axial direction of the drive shaft 51. The first connection shaft 54 has a hollow structure. The first connection shaft 54 is sleeved outside the drive shaft 51. The first connection shaft 54 is matched with the outer wall of the hollow shaft segment 511, so that the first connection shaft 54 and the drive shaft 51 are movable in the axial direction and relatively fixed in the circumferential direction. The drive shaft 51 is sleeved outside the second connection shaft 55, and the second connection shaft 55 is matched with the inner wall of the hollow shaft segment 511, so that the second connection shaft 55 and the drive shaft 51 are movable in the axial direction and relatively fixed in the circumferential direction.

The first elastic member 56 is disposed outside the hollow shaft segment 511, and two ends of the first elastic member 56 abut against the drive shaft 51 and the first connection shaft 54 respectively. The second elastic member 57 is disposed inside the hollow shaft segment 511, and two ends of the second elastic member 57 abut against the drive shaft 51 and the second connection shaft 55 respectively.

In an embodiment, the first elastic member 56 is a first compression spring, and two ends of the first compression spring abut against the drive shaft 51 and the first connection shaft 54 respectively. The second elastic member 57 is a second compression spring, and two ends of the second compression spring abut against the drive shaft 51 and the second connection shaft 55 respectively. The first compression spring and the second compression spring are coaxially disposed with the drive shaft 51, and the first compression spring is sleeved outside the hollow shaft segment 511.

A direction control and regulation process of the switching output shaft 41c will be described below with reference to the transmission switching apparatus shown in FIG. 10 and FIG. 11.

The drive shaft 51 rotates in the first direction, and sequentially drives the first connection shaft 54, the first output shaft 52, and the reciprocating screw to rotate in the first direction. The reciprocating screw drives the transmission component 3 to reciprocatedly move. In case that the return-to-zero stopper of the bracket 31 reaches a designated zero position, a linear movement distance of the transmission component 3 is controlled by a number of rotations of the drive shaft 51 in the first direction. After the reciprocating screw pushes the transmission component 3 until the first transmission gear 331 is connected with the switching output gear 42 on the switching output shaft 41c in a manner of transmission, the drive shaft 51 is controlled to rotate in the second direction to sequentially drive the second connection shaft 55, the second output shaft 53, the transmission shaft 2, the drive gear 32, the first transmission gear 331, the switching output shaft 41a and the switching transition gear 43 on the switching output shaft 41b to rotate. The switching output gear 42 on the switching output shaft 41c is driven to rotate in the first direction, so that the control and regulation of the switching output shaft 41c in the first direction is realized.

The drive shaft 51 rotates in the first direction, and sequentially drives the first connection shaft 54, the first output shaft 52, and the reciprocating screw to rotate in the second direction. After the reciprocating screw pushes the transmission component 3 until the second transmission gear 332 is connected with the switching output gear 42 on the switching output shaft 41c in a manner of transmission, the drive shaft 51 is controlled to rotate in the second direction to sequentially drive the second connection shaft 55, the second output shaft 53, the transmission shaft 2, the drive gear 32, the second transmission gear 332, the switching output shaft 41a and the switching transition gear 43 on the switching output shaft 41b to rotate. Further, the switching output gear 42 on the switching output shaft 41c is driven to rotate in the second direction, so that a control and regulation of the switching output shaft 41c in the second direction is realized.

Embodiments of the present application further provide a drive apparatus, including a drive component and the transmission switching apparatus described in any of the above embodiments. A transmission shaft 2 and a linear transmission member 1 are respectively connected with the drive component, and the drive component is used to drive the transmission shaft 2 and the linear transmission member 1 to move.

In some embodiments, the drive component may include a first drive member and a second drive member. The first drive member is connected with the transmission shaft 2 and is used to drive the transmission shaft 2 to rotate. The second drive member is connected with the linear transmission member 1 and is used to drive the linear transmission member 1 to move to drive a bracket 31 to reciprocate along a straight line. For example, the first drive member is a rotary motor, and the second drive member is a linear motor.

In other embodiments, the drive component may include only one drive member, such as a rotary motor. The drive apparatus includes a reciprocating screw and a switching input component 5. The drive member is connected with a drive shaft 51 to drive the drive shaft 51 to rotate, and the plurality of phase shifters are regulated by one motor.

By switching the drive shaft 51 to be connected with the reciprocating screw in a manner of transmission, a transmission connection between a motor and a designated switching output shaft 41 is established, and a transmission connection between the motor and a designated phase shifter to be regulated is then established. By switching the drive shaft 51 to a transmission connection with the transmission shaft 2, the motor drives the designated switching output shaft 41 to rotate, and then drives an input shaft of the phase shifter to be regulated to rotate. The drive apparatus can flexibly switch transmissions as needed to drive any phase shifter of the plurality of phase shifters connected with the drive apparatus, so that phase regulation of a plurality of phase shifters by one motor is realized. The drive apparatus occupies a small space, is very conducive to miniaturization and a layout of a multi-frequency integrated antenna, reduces material costs and manufacturing costs, and is not prone to jamming under conventional processes.

The present application further provides a base station antenna, which includes a plurality of phase shifters and the transmission switching apparatus described in any of the above embodiments. Or, the base station antenna includes a plurality of phase shifters and the drive apparatus described in any of the above embodiments. A plurality of switching output shafts 41 are connected with power input ends of the plurality of phase shifters in a one-to-one correspondence.

It should be noted that the above embodiments are merely used to illustrate the technical solutions of the present application, and are not limited thereto. Although the present application has been described in detail with reference to the foregoing embodiments, it should be understood by those skilled in the art that the technical solutions recited in the foregoing embodiments can still be modified, or some of the technical features can be equivalently replaced, and these modifications or substitutions do not make the essence of the corresponding technical solutions separate from the scope of the technical solutions of the embodiments of the present application.

## Claims

1. A transmission switching apparatus, comprising a linear transmission member, a transmission shaft, a transmission component and a switching output component,
wherein the transmission component comprises a bracket and a drive gear, both the drive gear and the transmission shaft are rotatably mounted on the bracket; the transmission shaft is coaxially connected with the drive gear to drive the drive gear to rotate, the linear transmission member is connected with the bracket to drive the bracket to reciprocatedly move; and the switching output component comprises a plurality of switching output shafts, each of the plurality of switching output shaft is equipped with a switching output gear, and the drive gear is connected with a plurality of switching output gears in a manner of transmission.

2. The transmission switching apparatus of claim 1, wherein the linear transmission member is a reciprocating screw.

3. The transmission switching apparatus of claim 1, wherein the transmission component further comprises a plurality of transmission gears, the plurality of transmission gears are meshed with the drive gear respectively, and each of the plurality of transmission gears is meshed with a plurality of switching output gears.

4. The transmission switching apparatus of claim 1, wherein the transmission component further comprises a first transmission gear set and a second transmission gear set, wherein the first transmission gear set and the second transmission gear set are disposed at intervals along an axial direction of the drive gear; and the first transmission gear set comprises at least one first transmission gear, and the second transmission gear set comprises a transmission transition gear and at least one second transmission gear,
wherein the first transmission gear and the transmission transition gear are meshed with the drive gear respectively, the second transmission gear is meshed with the transmission transition gear, and both the first transmission gear and the second transmission gear are meshed with the plurality of switching output gears.

5. The transmission switching apparatus of claim 4, wherein the plurality of switching output shafts are disposed at two sides of the transmission shaft; and
a number of the first transmission gears is two, the two first transmission gears are disposed at two sides of the transmission shaft to be meshed with the switching output gears on two sides of the transmission shaft respectively; and a number of the second transmission gears is two, the two second transmission gears are disposed at two sides of the transmission shaft to be connected with the switching output gears at two sides of the transmission shaft in a manner of transmission.

6. The transmission switching apparatus of claim 1, wherein the switching output shaft is parallel to the transmission shaft, and the plurality of switching output shafts are disposed from a position close to the transmission shaft to a direction away from the transmission shaft; and
other switching output shafts between the transmission shaft and any of the switching output shafts are equipped with a switching transition gear, the switching transition gear is movably connected with the switching output shaft in a circumferential direction, and the drive gear is connected with any switching output gear in a manner of transmission through the switching transition gear.

7. The transmission switching apparatus of claim 2, wherein the bracket is equipped with a return-to-zero stopper, wherein the return-to-zero stopper is used for a position detection mechanism to detect a relative position between the bracket and the reciprocating screw.

8. The transmission switching apparatus of claim 1, wherein both the bracket and the drive gear are movably connected with the transmission shaft in an axial direction of the transmission shaft.

9. The transmission switching apparatus of claim 2, further comprising a switching input component, wherein the switching input component comprises a drive shaft, a first output shaft and a second output shaft, the drive shaft is used to drive the first output shaft and the second output shaft to rotate respectively, wherein the first output shaft is equipped with a first gear, an end of the reciprocating screw is equipped with a second gear, the first gear meshes with the second gear, and the second output shaft is fixedly connected with the transmission shaft in a circumferential direction of the transmission shaft.

10. The transmission switching apparatus of claim 9, wherein the switching input component further comprises a first connection shaft and a second connection shaft, wherein the drive shaft, the first connection shaft and the second connection shaft are movably connected in an axial direction of the drive shaft, and the drive shaft is used to drive the first connection shaft and the second connection shaft to rotate; and
the first connection shaft abuts against the first output shaft through a first bevel gear structure, the second connection shaft abuts against the second output shaft through a second bevel gear structure, and a rotation direction of the first bevel gear structure is opposite to a rotation direction of the second bevel gear structure.

11. The transmission switching apparatus of claim 10, wherein a first elastic member is disposed between the first connection shaft and the drive shaft, and the first connection shaft abuts against the first output shaft through the first elastic member; and a second elastic member is disposed between the second connection shaft and the drive shaft, and the second connection shaft abuts against the second output shaft through the second elastic member.

12. The transmission switching apparatus of claim 11, wherein the first elastic member is a first compression spring, and two ends of the first compression spring abut against the drive shaft and the first connection shaft respectively; and the second elastic member is a second compression spring, and two ends of the second compression spring abut against the drive shaft and the second connection shaft respectively.

13. The transmission switching apparatus of claim 10, wherein the drive shaft is equipped with a hollow shaft segment, the first connection shaft is sleeved outside the hollow shaft segment, the hollow shaft segment is sleeved outside the second connection shaft, an inner wall and an outer wall of the hollow shaft segment are respectively equipped with limit structures, and the limit structure is used for limiting a rotation of the drive shaft relative to the first connection shaft and the second connection shaft.

14. A drive apparatus, comprising a drive component and the transmission switching apparatus of any one of claims 1 to 12, wherein a transmission shaft and a linear transmission member are connected with the drive component respectively, to drive the transmission shaft and the linear transmission member to move.

15. A base station antenna, comprising a plurality of phase shifters and the transmission switching apparatus of any one of claims 1 to 13; or comprising a plurality of phase shifters and the drive apparatus of claim 14, wherein a plurality of switching output shafts are connected with power input ends of the plurality of phase shifters in a one-to-one correspondence.
